# EUROPÄISCHE PATENTSCHRIFT

(11) **EP 1 993 054 B1**
(45) Veröffentlichungstag und Bekanntmachung des Hinweises auf die Patenterteilung: **21.05.2014**
(21) Anmeldenummer: 08007236.6
(22) Anmeldetag: 11.04.2008
(51) Int. Cl.: G06F 21/52

(54) **Verfahren zum Ausführen einer Software aus einem Endgerät**
Method for extracting software from a terminal
Procédé d'exécution d'un logiciel à partir d'un terminal

(30) Priorität: 16.05.2007 DE 102007022941
(43) Veröffentlichungstag der Anmeldung: 19.11.2008
(73) Patentinhaber: Giesecke & Devrient GmbH, 81677 München (DE)
(72) Erfinder: Spitz, Stephan, Dr., 81247 München (DE)

(56) Entgegenhaltungen:
- WO-A-01/98875
- CA-A1- 2 545 159
- US-A1- 2006 031 941
- US-A1- 2006 200 668
- US-A1- 2006 236 125

## Beschreibung

Die Erfindung betrifft ein Verfahren zum Ausführen einer Software auf einem Endgerät. Weiterhin betrifft die Erfindung ein Sicherheitsmodul für ein Endgerät sowie ein System mit einem Endgerät und einem Sicherheitsmodul.

Endgeräte, wie beispielsweise Mobilfunktelefone, können mit Sicherheitsmodulen ausgestattet sein, mit deren Hilfe ein Nachweis für das Vorliegen einer Berechtigung zur Nutzung der Endgeräte oder von Diensten erbracht werden kann, die mit den Endgeräten zugänglich sind. Bei Mobilfunktelefonen wird ein solches Sicherheitsmodul in der Regel als Subscriber Identity Module (SIM) bezeichnet und kann als eine Chipkarte ausgebildet sein, die in einen dafür vorgesehenen Steckplatz des Mobilfunktelefons eingesteckt ist.

Im Sicherheitsmodul sind Kenndaten gespeichert, mit deren Hilfe sich die Identität des Inhabers des Sicherheitsmoduls feststellen lässt und eine Authentisierung des Mobilfunktelefons gegenüber dem Mobilfunknetz durchgeführt werden kann. Die Authentisierung wird jeweils wenigstens im Rahmen der Anmeldung des Mobilfunktelefons im Mobilfunknetz durchgeführt, um eine missbräuchliche Inanspruchnahme des Mobilfunknetzes zu verhindern. Durch das Sicherheitsmodul wird dem Mobilfunktelefon eine Rufnummer zugewiesen, unter der das Mobilfunktelefon im Mobilfunknetz erreichbar ist und unter der ausgehende Gespräche abgerechnet werden. Weiterhin dient das Sicherheitsmodul beispielsweise der Speicherung eines persönlichen Telefonbuchs, von Kurznachrichten und von persönlichen Einstellungen des Mobilfunktelefons.

Neben der eigentlichen Mobilfunkanwendung wird in Mobilfunktelefonen in zunehmendem Maß weitere Software für zusätzliche Anwendungen, wie beispielsweise für einen Internetzugang, implementiert. Um Fehlfunktionen und Missbrauch zu verhindern, kann vorgesehen sein, dass nicht jede Software die Ressourcen des Mobilfunktelefons uneingeschränkt nutzen darf.

Dies kann beispielsweise dadurch erreicht werden, dass im Endgerät ausschließlich Software implementiert wird, deren Zugriffe auf die Ressourcen ordnungsgemäß geregelt sind. Hierzu ist es insbesondere erforderlich, das Nachladen von zusätzlicher Software zu kontrollieren. Dies kann gemäß der DE 10 2004 013 904 B4 bei einem System aus einem Endgerät und einem mobilen Datenträger dadurch erfolgen, dass im Endgerät ein Verifizierer zur Verifizierung des nachzuladenden Programmcodes vorgesehen wird. Ein Laden des Programmcodes zur Ausführung im Endgerät erfolgt erst nach Freigabe des Ladens des Programmcodes durch den mobilen Datenträger und Verifizieren des Programmcodes durch das Endgerät.

Aus der WO 03/049471 A1 ist ein Verfahren zum Speichern von und zum Zugreifen auf Konfigurationsdaten sowie zum Ausführen mindestens eines Anwendungsprogramms in einem Mobilgerät bekannt. Die Konfigurationsdaten geben an, ob bzw. in welchem Umfang das Anwendungsprogramm vom Mobilteil ausgeführt werden darf. Abhängig von den Konfigurationsdaten wird das gesamte Anwendungsprogramm oder ein Teil des Anwendungsprogramms ausgeführt.

US 2006/0200668 A1 verwaltet die Zugriffsrechte von Applikationen auf Ressourcen des Endgerätes mittels Tabellen im Betriebssystem des Endgerätes.

CA 2545159 A1 offenbart die Merkmale des Oberbegriffs von Anspruch 1.

Der Erfindung liegt die Aufgabe zugrunde, bei einer Ausführung einer Software auf einem Endgerät zu gewährleisten, dass die Software lediglich auf dafür vorgesehene Ressourcen zugreift. Diese Aufgabe wird durch ein Verfahren mit den in Anspruch 1 angegebenen Verfahrensschritten gelöst.

Beim erfindungsgemäßen Verfahren zum Ausführen einer Software auf einem Endgerät, wird die Identität der Software von einem Sicherheitsmodul geprüft. Weiterhin werden zur Software korrespondierende Zugriffsrechte vom Sicherheitsmodul ermittelt oder geprüft und es wird die Ausführung der Software mit den ermittelten Zugriffsrechten vom Sicherheitsmodul freigegeben. Schließlich wird die Software unter Berücksichtigung der Zugriffsrechte auf dem Endgerät ausgeführt.

Die Erfindung hat den Vorteil, dass die Ressourcen des Endgeräts zuverlässig vor unberechtigten Zugriffen der Software geschützt werden. Dadurch kann ein störungsfreier Ablauf bei der Ausführung der Software erreicht werden. Zudem können mit der Ausführung der Software verbundene Sicherheitsrisiken reduziert werden.

Im Rahmen der Identitätsprüfung der Software kann ermittelt werden, ob die Software gegenüber einer vorgegebenen Version verändert wurde. Auf diese Weise können etwaige Manipulationen an der Software erkannt werden.

Der Ablauf des erfindungsgemäßen Verfahrens kann so gestaltet werden, dass vom Endgerät eine Anfrage bezüglich der Freigabe der Ausführung der Software an das Sicherheitsmodul übermittelt wird. Vom Endgerät kann weiterhin eine für die Software charakteristische Kennung an das Sicherheitsmodul übermittelt werden. Die Kennung kann vom Endgerät aus einem Code erzeugt werden, der die Software repräsentiert. Auf diese Weise kann sichergestellt werden, dass tatsächlich die aktuell vorhandene Version der Software der Identitätsprüfung zugrunde gelegt wird.

Die Kennung kann vom Endgerät mittels eines asymmetrischen Algorithmus in nicht umkehrbarer Weise erzeugt werden. Auf diese Weise ist es möglich, den Datenumfang auf einen Wert zu reduzieren, der für eine Kennung geeignet ist. Dennoch besteht ein eindeutiger Zusammenhang zwischen dem Programmcode und der Kennung. Eine gezielte Manipulation des Programmcodes, die keinen Einfluss auf die Kennung hat, ist sehr unwahrscheinlich.

Die Kennung kann vom Sicherheitsmodul geprüft werden. Dadurch kann ein hoher Sicherheitsstandard gewährleistet werden. Die Prüfung der Kennung kann auf Basis eines direkten oder indirekten Vergleichs mit einem kryptographisch gesicherten Referenzwert für die Kennung erfolgen. Dies lässt sich mit einem vergleichsweise geringen Aufwand realisieren und ermöglicht einen hohen Sicherheitsstandard.

Der Referenzwert für die Kennung kann vor der Durchführung der Prüfung vom Endgerät an das Sicherheitsmodul übermittelt werden. Zudem kann der Referenzwert für die Kennung vor der Durchführung der Prüfung einer kryptographischen Umformung unterzogen werden. Dies kann erforderlich sein, um einen Vergleich mit der beispielsweise unverschlüsselt vorliegenden Kennung durchführen zu können. Die kryptographische Umformung des Referenzwerts für die Kennung kann mit Hilfe eines kryptographischen Schlüssels durchgeführt werden. In diesem Zusammenhang ist es möglich, dass die Ermittlung oder Prüfung der zur Software korrespondierenden Zugriffsrechte auf Basis des kryptographischen Schlüssels durchgeführt wird. Dies hat den Vorteil, dass die Zugriffsrechte nicht nur bezogen auf die Software, sondern bezogen auf den Schlüssel vorgeben werden können.

Die Ermittlung oder Prüfung der zur Software korrespondierenden Zugriffsrechte kann auf Basis von Daten durchgeführt werden, die im Sicherheitsmodul gespeichert sind. Da das Sicherheitsmodul sehr manipulationssicher ausgelegt werden kann, führt diese Vorgehensweise zu besonders zuverlässigen Ergebnissen. Vom Endgerät können zur Software korrespondierende Zugriffsrechte für die Prüfung an das Sicherheitsmodul übermittelt werden.

Durch die Zugriffsrechte kann der Zugriff auf Ressourcen des Endgeräts und/oder des Sicherheitsmoduls im Rahmen der Ausführung der Software geregelt werden, insbesondere der Zugriff auf Schnittstellen des Endgeräts und/ oder auf Daten, die im Endgerät oder im Sicherheitsmodul gespeichert sind. Dies ermöglicht die Nutzung der Ressourcen durch unterschiedliche Software, beispielsweise durch unterschiedliche Anwendungsprogramme und reduziert gleichzeitig das Risiko einer missbräuchlichen Nutzung der Ressourcen.

Im Rahmen des erfindungsgemäßen Verfahrens kann vorgesehen sein, dass eine Antwort bezüglich der Freigabe der Ausführung der Software vom Sicherheitsmodul an das Endgerät übermittelt wird. Die Antwort kann insbesondere an ein sicheres Betriebssystem oder eine sichere Laufzeitumgebung des Endgeräts übermittelt werden, um einen hohen Sicherheitsstandard zu gewährleisten. Dabei kann die Antwort eine Angabe zu den Zugriffsrechten enthalten, für welche die Ausführung der Software freigegeben wird.

Die Zugriffsrechte können temporär im Endgerät eingerichtet werden. Dies hat den Vorteil, dass beispielsweise vor jeder erneuten Ausführung der Software eine erneute Einrichtung der Zugriffsrechte und Prüfung der Software erforderlich ist. Auf diese Weise kann die Gefahr einer Manipulation der Zugriffsrechte und der Software reduziert werden.

Das erfindungsgemäße System umfasst ein Endgerät und ein Sicherheitsmodul. Im Endgerät ist eine ausführbare Software implementiert. Weiterhin weist das Endgerät Ressourcen auf, deren Nutzung an den Nachweis von Zugriffrechten gebunden ist. Im Sicherheitsmodul sind Daten zur Prüfung der Identität der Software und Daten zur Ermittlung der Zugriffsrechte gespeichert, die für die Ausführung der Software zur Verfügung stehen.

Das Endgerät weist vorzugsweise ein sicheres Betriebssystem oder eine sichere Laufzeitumgebung auf, um einen zuverlässigen Schutz vor Manipulationen zu gewährleisten. Insbesondere kann das Endgerät als ein Mobilfunkgerät ausgebildet sein.

Das Sicherheitsmodul kann entnehmbar im Endgerät angeordnet sein. Vorzugsweise ist das Sicherheitsmodul als eine Chipkarte ausgebildet.

Die Erfindung bezieht sich weiterhin auf ein Sicherheitsmodul für ein Endgerät. Im Sicherheitsmodul sind Daten zur Prüfung der Identität einer vom Endgerät ausführbaren Software und Daten zur Ermittlung von Zugriffsrechten gespeichert, die bei der Ausführung der Software einen Zugriff auf Ressourcen des Endgeräts und/ oder des Sicherheitsmoduls ermöglichen.

Die Erfindung wird nachstehend anhand der in der Zeichnung dargestellten Ausführungsbeispiele erläutert.

Es zeigen:
Fig.1 ein Ausführungsbeispiel des erfindungsgemäßen Systems in einer vereinfachten Blockdarstellung,
Fig. 2 ein Ablaufdiagramm für eine erste Variante des erfindungsgemäßen Verfahrens zum Ausführen von Software auf dem Mobilfunktelefon und
Fig. 3 ein Ablaufdiagramm für eine zweite Variante des erfindungsgemäßen Verfahrens zum Ausführen von Software auf dem Mobilfunktelefon.

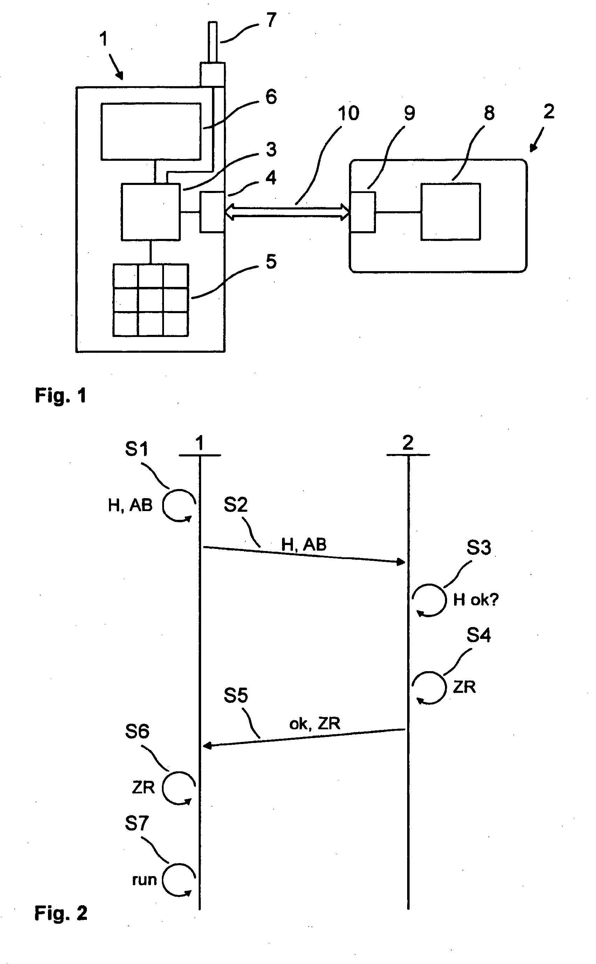

Fig.1 zeigt ein Ausführungsbeispiel des erfindungsgemäßen Systems in einer vereinfachten Blockdarstellung. Das erfindungsgemäße System weist ein Mobilfunktelefon 1 und ein Sicherheitsmodul 2 auf.

Das Mobilfunktelefon 1 verfügt über eine Geräteelektronik 3, an die eine Kontaktiereinheit 4, eine Tastatur 5, eine Anzeige 6 und eine Antenne 7 angeschlossen sind. Die Geräteelektronik 3 kann einen oder mehrere Halbleiterchips und sonstige elektronische Komponenten aufweisen. Insbesondere kann die Geräteelektronik 3 einen Mikroprozessor aufweisen, in dem ein Betriebssystem und sonstige Software, beispielsweise Anwendungsprogramme, implementiert sind. Bei dem Betriebssystem handelt es sich um ein sicheres Betriebssystem, das gegen Manipulationen geschützt ist. Die Sicherheit des Betriebssystems kann über kryptographische Verfahren und/ oder den Einsatz sicherer Hardware gewährleistet werden. Die Software wird beispielsweise benötigt, um mit dem Mobilfunktelefon 1 ein Telefongespräch abzuwickeln. Darüber hinaus ist auch Software für sonstige Anwendungen vorgesehen, die den Einsatzbereich des Mobilfunktelefons 1 erweitern. Beispielsweise kann eine Software vorgesehen sein, die einen Internetzugang ermöglicht.

Bei dem Sicherheitsmodul 2 kann es sich um ein Subscriber Identity Module (SIM) handeln, das beispielsweise für den Nachweis einer Zugangsberechtigung zu einem Mobilfunknetz benötigt wird. Das Sicherheitsmodul 2 ist beispielsweise als eine Chipkarte, insbesondere als eine Chipkarte im Format ID-000 ausgebildet und weist einen integrierten Schaltkreis 8 auf, an den ein Kontaktfeld 9 angeschlossen ist. Der integrierte Schaltkreis 8 ist insbesondere als ein Mikroprozessor ausgebildet, in dem analog zum Mikroprozessor des Mobilfunktelefons 1 ein Betriebssystem und weitere Software implementiert sein kann. Der integrierte Schaltkreis 8 weist eine höhere Manipulationssicherheit als die Geräteelektronik 3 des Mobilfunktelefons 1 auf.

Das Sicherheitsmodul 2 ist derart in das Mobilfunktelefon 1 eingesteckt, dass die Kontaktiereinheit 4 des Mobilfunktelefons 1 das Kontaktfeld 9 des Sicherheitsmoduls 2 berührend kontaktiert, so dass eine oder mehrere galvanische Verbindungen zwischen dem Mobilfunktelefon 1 und dem Sicherheitsmodul 2 ausgebildet sind. Über diese galvanischen Verbindungen kann dem Sicherheitsmodul 2 vom Mobilfunktelefon 1 eine Betriebsspannung zugeführt werden. Weiterhin kann über die galvanischen Verbindungen eine Datenübertragung zwischen dem Mobilfunktelefon 1 und dem Sicherheitsmodul 2 durchgeführt werden. Ein bei einer derartigen Datenübertragung ausgebildeter bidirektionaler Datenstrom ist in Fig.1 durch einen Doppelpfeil 10 dargestellt.

Für die Ausführung der im Mobilfunktelefon 1 implementierten Software ist in der Regel ein Zugriff auf Ressourcen des Mobilfunktelefons 1 erforderlich. Beispielsweise kann für die Ausführung der Software ein Zugriff auf einen Speicher des Mobilfunktelefons 1 oder auf Kommunikationsschnittstellen des Mobilfunktelefons 1 erforderlich sein, die eine Kommunikation über die Antenne 7 oder über die Kontaktiereinheit 4 ermöglichen.

Eine uneingeschränkte Freigabe des Zugriffs auf die Ressourcen des Mobilfunktelefons 1 würde die Gefahr einer Funktionsbeeinträchtigung durch eine zu starke Beanspruchung der Ressourcen und einer missbräuchlichen Nutzung des Mobilfunktelefons 1 zur Folge haben. Aus diesem Grund wird die Nutzung der Ressourcen des Mobilfunktelefons 1 durch die Software im Rahmen der Erfindung auf die im Folgenden näher beschriebene Weise einer Kontrolle unterzogen. Diese Kontrolle wird unter Einbeziehung des Sicherheitsmoduls 2 durchgeführt, um Manipulationen möglichst zu verhindern. Dabei prüft das Sicherheitsmodul 2 die Identität der Software und gibt die Ausführung der Software mit bestimmten Zugriffsrechten bzgl. der Nutzung der Ressourcen frei.

Fig. 2 zeigt ein Ablaufdiagramm für eine erste Variante des erfindungsgemäßen Verfahrens zum Ausführen von Software auf dem Mobilfunktelefon 1. Auf der linken Seite der Fig. 2 ist das Mobilfunktelefon 1, auf der rechten Seite das Sicherheitsmodul 2 dargestellt.

Das Ablaufdiagramm beginnt mit einem Schritt S1, in dem das Mobilfunktelefon 1 einen Hashwert H über den Programmcode der auszuführenden Software berechnet und der Software zugeordnete Autorisierungsbytes AB aus seinem Speicher ausliest. Die Autorisierungsbytes AB stellen eine kryptographische Absicherung eines Referenz-Hashwerts H' dar und können beispielsweise vor der Implementierung der Software vom Software-Hersteller durch Verschlüsselung des Referenz-Hashwerts H' erzeugt werden. Ebenso ist es auch möglich, dass der Mobilfunkprovider die Autorisierungsbytes AB zur Verfügung stellt.

Auf Schritt S1 folgt ein Schritt S2, in dem der Hashwert H und die Autorisierungsbytes AB vom Mobilfunktelefon 1 an das Sicherheitsmodul 2 übermittelt werden.

Anschließend wird ein Schritt S3 ausgeführt, in dem das Sicherheitsmodul 2 die Identität der Software prüft. Hierzu unterzieht das Sicherheitsmodul 2 die Autorisierungsbytes AB einer Entschlüsselung und ermittelt auf diese Weise den Referenz-Haschwert H'. Der für die Entschlüsselung benötigte Schlüssel ist im Sicherheitsmodul 2 gespeichert. Insbesondere können auch mehrere Schlüssel im Sicherheitsmodul 2 gespeichert sein, von denen einer für die Entschlüsselung der Autorisierungsbytes AB ausgewählt wird. Die Auswahl des Schlüssels kann z. B. über einen Key-Identifier erfolgen. Bei dem Schlüssel kann es sich um einen öffentlichen Schlüssel handeln. In diesem Fall stellen die Autorisierungsbytes AB eine asymmetrische Signatur des Referenz-Hashwerts H' mittels eines privaten und damit geheimen Schlüssels dar. Ebenso ist es auch möglich, den Refernez-Hashwert H' mittels eines Message Authentication Codes (MAC) mit einem geheimen symmetrischen Schlüssel abzusichern. In diesem Fall ist der MAC-Schlüssel im Sicherheitsmodul 2 abgelegt.

Nach der Entschlüsselung der Autorisierungsbytes AB vergleicht das Sicherheitsmodul 2 den vom Mobilfunktelefon 1 übermittelten Hashwert H mit dem durch die Entschlüsselung ermittelten Referenz-Hashwert H'. Im Falle einer Übereinstimmung wird davon ausgegangen, dass die Software in korrekter Form vorliegt. Andernfalls wird auf eine Unstimmigkeit hinsichtlich der Software geschlossen.

An Schritt S3 schließt sich ein Schritt S4 an, in dem vom Sicherheitsmodul 2 Zugriffsrechte ZR ermittelt werden, die während der Ausführung der Software verfügbar sind. Die Ermittlung der Zugriffsrechte ZR kann beispielsweise durch eine Auswahl der Zugriffsrechte ZR erfolgen, die dem für die Entschlüsselung der Autorisierungsbytes AB verwendeten Schlüssel zugeordnet sind. In diesem Fall sind die Zugriffsrechte ZR nicht notwendigerweise speziell an eine Software, sondern an die Instanz gebunden, von welcher der Schlüssel herausgegeben wurde. Die Zuordnungen zwischen den Schlüsseln und den Zugriffsrechten ZR können in einer Tabelle im Sicherheitsmodul 2 hinterlegt sein. Die Tabelle kann im Rahmen der Initialisierung oder Personalisierung des Sicherheitsmoduls 2 angelegt werden und ggf. über die Luftschnittstelle des Mobilfunktelefons 1, d. h. über die Schnittstelle, an welche die Antenne 7 angeschlossen ist, aktualisiert werden. Eine Aktualisierung der Tabelle kann beispielsweise nach einer Aktualisierung der Software oder einem Hinzufügen von neuer Software erforderlich sein.

Über die Zugriffsrechte ZR kann unter anderem die Nutzung von Schnittstellen des Mobilfunktelefons 1, wie beispielsweise der Luftschnittstelle, einer Schnittstelle für eine kurzreichweitige Kommunikation insbesondere über Nahfelder, einer Bluetooth-Schnittstelle, einer Infrarotschnittstelle usw. geregelt sein. Weiterhin kann über die Zugriffsrechte ZR der Zugang zu Daten des Mobilfunktelefons 1 und/oder des Sicherheitsmoduls 2 geregelt sein.

Die Ausführung des Schrittes S4 kann an eine positive Prüfung der Identität der Software im Schritt S3 geknüpft werden, so dass Schritt S4 nur dann ausgeführt wird, wenn zuvor im Schritt S3 festgestellt wurde, dass die Software in korrekter Form vorliegt.

Es folgt dann ein Schritt S5, in dem die Ausführung der Software mit den ermittelten Zugriffsrechten ZG freigeschaltet wird, falls zuvor im Schritt S3 die Prüfung der Identität der Software positiv verlief. Im Rahmen der Freischaltung wird dem Mobilfunktelefon 1 vom Sicherheitsmodul 2 das Ergebnis der Identitätsprüfung der Software mitgeteilt. Gemäß Fig. 2 wird dem Mobilfunktelefon 1 vom Sicherheitsmodul 2 ein "ok" übermittelt, da die Identitätsprüfung positiv verlief. Anstelle dieser Mitteilung oder zusätzlich zu dieser Mitteilung kann das Sicherheitsmodul 2 auch bestimmte Schlüssel freigeben, mit denen für die Ausführung der Software benötigte Daten oder Bestandteile des Programmcodes entschlüsselt werden können. Weiterhin werden im Rahmen der Freischaltung die in Schritt S4 ermittelten Zugriffsrechte ZG vom Sicherheitsmodul 2 an das Mobilfunktelefon 1 übermittelt.

Falls die Ausführung der Software im Schritt S5 freigeschaltet wurde, wird als nächstes ein Schritt S6 ausgeführt, in dem vom Betriebssystem oder von einer Laufzeitumgebung, insbesondere einer JAVA-Laufzeitumgebung, des Mobilfunktelefons 1 die Zugriffsrechte ZG eingerichtet werden. Insbesondere besteht dabei die Möglichkeit, die Zugriffsrechte ZG lediglich temporär einzurichten, so dass diese nach erfolgter Ausführung der Software nicht fortbestehen. Bei einer zukünftigen Ausführung der Software ist dann eine erneute Identitätsprüfung und Ermittlung der Zugriffsrechte ZG durch das Sicherheitsmodul 2 erforderlich.

Im Anschluss an Schritt S6 wird die Software in einem Schritt S7 mit den in Schritt S6 eingerichteten Zugriffsrechten ZR ausgeführt. Mit Schritt S7 endet das in Fig. 2 dargestellte Ablaufdiagramm.

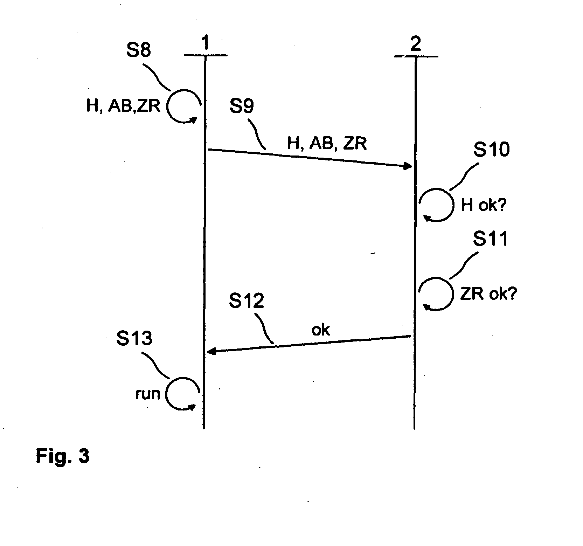

Fig. 3 zeigt ein Ablaufdiagramm für eine zweite Variante des erfindungsgemäßen Verfahrens zum Ausführen von Software auf dem Mobilfunktelefon
1. Analog zu Fig. 2 ist auf der linken Seite der Fig. 3 das Mobilfunktelefon 1 und auf der rechten Seite das Sicherheitsmodul 2 dargestellt.

Das Ablaufdiagramm beginnt mit einem Schritt S8, der dem Schritt S1 der in Fig. 2 dargestellten ersten Variante entspricht. Allerdings werden in Schritt S8 zusätzlich zu den Autorisierungsbytes AB Zugriffsrechte ZR für die Ausführung der Software aus dem Speicher des Mobilfunktelefons 1 ausgelesen.

In einem auf Schritt S8 folgenden Schritt S9 werden der Hashwert H, die Autorisierungsbytes AB und die Zugriffsrechte ZR vom Mobilfunktelefon 1 an das Sicherheitsmodul 2 übermittelt.

Anschließend wird ein Schritt S10 ausgeführt, in dem das Sicherheitsmodul 2 in identischer Weise wie für Schritt S3 beschrieben die Identität der Software prüft.

Es folgt dann ein Schritt S11, in dem vom Sicherheitsmodul 2 geprüft wird, ob die vom Mobilfunktelefon 1 übermittelten Zugriffsrechte ZR bei der Ausführung der Software verwendet werden dürfen. Hierzu kann das Sicherheitsmodul 2 die für die Ausführung der Software vorgesehenen Zugriffsrechte ZR nochmals selbst ermitteln. Dabei kann in der für Schritt S4 beschriebenen Weise vorgegangen werden. Insoweit eine Übereinstimmung zwischen den vom Mobilfunktelefon 1 übermittelten Zugriffsrechten ZR und den vom Sicherheitsmodul 2 ermittelten Zugriffsrechten ZR besteht, ist eine Verwendung der Zugriffsrechte ZR bei der Ausführung der Software zulässig.

Demgemäß erfolgt in einem sich anschließenden Schritt S12 bei einer Übereinstimmung der Zugriffsrechte ZR eine Freischaltung der Ausführung der Software mit den vom Mobilfunktelefon 1 übermittelten Zugriffsrechten, falls zuvor im Schritt S10 zudem die Prüfung der Identität der Software positiv verlaufen ist. Für die Freischaltung ist es lediglich erforderlich, dass das Sicherheitsmodul 2 dem Mobilfunktelefon 1 eine Erlaubnis zur Ausführung der Software übermittelt. Eine Übermittlung der Zugriffsrechte ZR ist nicht erforderlich, da diese dem Mobilfunktelefon 1 bereits bekannt sind.

Im Anschluss an die in Schritt S12 erfolgte Freischaltung wird die Software in einem Schritt S13 mit den in Schritt S8 ermittelten Zugriffsrechten ZR ausgeführt. Mit Schritt S13 endet das in Fig. 3 dargestellte Ablaufdiagramm.

Um einen möglichst guten Schutz gegen Manipulationen der für die Ausführung der Software zugelassenen Zugriffsrechte ZR zu erreichen, kann bei allen Varianten des erfindungsgemäßen Verfahrens die Datenübertragung zwischen dem Mobilfunktelefon 1 und dem Sicherheitsmodul 2 jeweils über einen sicheren Kanal abgewickelt werden oder über eine Authentisierung zwischen dem (sicheren) Betriebssystem des Mobilfunktelefon 1 und dem Sicherheitsmodul 2 abgesichert werden. Diese Maßnahmen können auch lediglich für einen Teil der Datenübertragung vorgesehen werden. Beispielsweise sind die Authentisierungsbytes AB bereits kryptographisch abgesichert, so dass weitere Sicherungsmaßnahmen während der Datenübertragung nicht erforderlich sind. Bei einer Übermittlung der Freischaltungsformation und der Zugriffsrechte ZR vom Sicherheitsmodul 2 zum Mobilfunktelefon 1 ist eine Absicherung dagegen angeraten. Ein sicheres Betriebssystem auf dem Mobilfunktelefon kann beispielsweise mit Hilfe eines Mobile Truted Modul (MTM) gemäß Spezifikation der Trusted Computing Group (TCG) als weiteres Sicherheitsmodul erzielt werden.

Das Sicherheitsmodul 2 ist nicht an eine dauerhafte Nutzung bei ein und demselben Mobilfunktelefon 1 gebunden, sondern kann aus dem Mobilfunktelefon 1 entnommen und in ein anderes Mobilfunktelefon 1 mit anderen Ressourcen eingesetzt werden. In einem solchen Fall kann vorgesehen sein, dass das Sicherheitsmodul 2 ermittelt, über welche Ressourcen das Mobilfunktelefon 1 verfügt. Hierfür können sowohl standardisierte als auch proprietäre Verfahren eingesetzt werden.

## Patentansprüche

1. Verfahren zum Ausführen einer Software auf einem Endgerät (1), wobei das Endgerät mit einem Sicherheitsmodul (2) mit eigenem Mikroprozessor verbunden ist, wobei
- vom Endgerät (1) eine Anfrage an das Sicherheitsmodul (2) übermittelt wird (S2,S9), und
- die Identität der Software von dem Sicherheitsmodul geprüft wird (S3,S10);
- zur Software korrespondierende Zugriffsrechte vom Sicherheitsmodul (2) ermittelt werden (S4,S11) auf Basis von Daten, die im Sicherheitsmodul (2) gespeichert sind;
- eine Antwort vom Sicherheitsmodul (2) an das Endgerät (1) übermittelt wird (S5,S12); und
- die Software auf dem Endgerät ausgeführt wird (S7,S13);
**dadurch gekennzeichnet, dass**
durch die Zugriffsrechte der Zugriff auf Ressourcen des Endgeräts (1) im Rahmen der Ausführung der Software geregelt wird;
die Zugriffsrechte entweder in der Anfrage oder in der Antwort enthalten sind, wobei das Sicherheitsmodul (2) respektive entweder prüft, ob die in der Anfrage enthaltenen Zugriffsrechte mit den ermittelten Zugriffsrechten übereinstimmen (S11), oder die ermittelten Zugriffsrechte in der Antwort an das Endgerät (1) übermittelt (S5);
durch die Antwort des Sicherheitsmoduls (2) die Ausführung der Software auf dem Endgerät (1) mit den ermittelten Zugriffsrechten vom Sicherheitsmodul (2) freigegeben wird; und
die Ermittlung der Zugriffsrechte durch eine Auswahl von Zugriffsrechten erfolgt, welche einem in dem Schritt des Prüfens der Identität der Software verwendeten kryptographischen Schlüssel zugeordnet sind.

2. Verfahren nach Anspruch 1, **dadurch gekennzeichnet, dass** im Rahmen der Identitätsprüfung der Software ermittelt wird, ob die Software gegenüber einer vorgegebenen Version verändert wurde.

3. Verfahren nach einem der vorhergehenden Ansprüche, **dadurch gekennzeichnet, dass** vom Endgerät (1) eine für die Software charakteristische Kennung an das Sicherheitsmodul (2) übermittelt wird.

4. Verfahren nach Anspruch 3, **dadurch gekennzeichnet, dass** die Kennung vom Sicherheitsmodul (2) geprüft wird.

5. Verfahren nach einem der Ansprüche 3 bis 4, **dadurch gekennzeichnet, dass** die Prüfung der Kennung auf Basis eines direkten oder indirekten Vergleichs mit einem kryptographisch gesicherten Referenzwert für die Kennung erfolgt.

6. Verfahren nach Anspruch 5, **dadurch gekennzeichnet, dass** der Referenzwert für die Kennung vor der Durchführung der Prüfung vom Endgerät (1) an das Sicherheitsmodul (2) übermittelt wird.

7. Verfahren nach einem der Ansprüche 5 oder 6, **dadurch gekennzeichnet, dass** der Referenzwert für die Kennung vor der Durchführung der Prüfung einer kryptographischen Umformung unterzogen wird.

8. Verfahren nach Anspruch 7, **dadurch gekennzeichnet, dass** die kryptographische Umformung mit Hilfe des kryptographischen Schlüssels durchgeführt wird.

9. Verfahren nach einem der vorhergehenden Ansprüche, **dadurch gekennzeichnet, dass** durch die Zugriffsrechte der Zugriff auf Schnittstellen des Endgeräts (1) und/oder auf Daten, die im Endgerät (1) gespeichert sind, im Rahmen der Ausführung der Software geregelt wird.

10. System umfassend
- ein Endgerät (1), in dem eine ausführbare Software implementiert ist und das Ressourcen aufweist, deren Nutzung an den Nachweis von Zugriffrechten gebunden ist und
- ein Sicherheitsmodul (2), in dem Daten zur Prüfung der Identität der Software und Daten zur Ermittlung der Zugriffsrechte gespeichert sind, die für die Ausführung der Software zur Verfügung stehen wobei das Endgerät und das Sicherheitsmodul eingerichtet sind zur Ausführung eines Verfahrens nach einem der Ansprüche 1 bis 9.

11. Sicherheitsmodul für ein Endgerät (1), wobei im Sicherheitsmodul (2) Daten zur Prüfung der Identität einer vom Endgerät (1) ausführbaren Software und Daten zur Ermittlung oder Prüfung von Zugriffsrechten gespeichert sind, die bei der Ausführung der Software einen Zugriff auf Ressourcen des Endgeräts (1) ermöglichen, wobei das Sicherheitsmodul eingerichtet ist
- vom Endgerät eine Anfrage bezüglich der Freigabe der Ausführung der Software an das Sicherheitsmodul (2) zu empfangen;
- die Identität der Software zu prüfen;
- zur Software korrespondierende Zugriffsrechte zu ermitteln (S4,S11) auf Basis der zur Ermittlung oder Prüfung von Zugriffsrechten gespeicherten Daten; und
- eine Antwort (2) an das Endgerät (1) zu übermitteln (S5,S12);
**dadurch gekennzeichnet, dass**
durch die Zugriffsrechte der Zugriff auf Ressourcen des Endgeräts (1) im Rahmen der Ausführung der Software geregelt wird;
die Zugriffsrechte entweder in der Anfrage oder in der Antwort enthalten sind, wobei das Sicherheitsmodul (2) respektiv entweder prüft, ob die in der Anfrage enthaltenen Zugriffsrechte mit den ermittelten Zugriffsrechten übereinstimmen (S11), oder die ermittelten Zugriffsrechte in der Antwort an das Endgerät (1) übermittelt (S5);
durch die Antwort des Sicherheitsmoduls (2) die Ausführung der Software auf dem Endgerät (1) mit den ermittelten Zugriffsrechten vom Sicherheitsmodul (2) freigegeben wird; und
das Sicherheitsmodul eingerichtet ist die Zugriffsrechte durch Auswahl von Zugriffsrechten zu ermitteln, welche einem in dem Schritt des Prüfens der Identität der Software verwendeten kryptographischen Schlüssel zugeordnet sind.

## Claims

1. A method for executing a software on a terminal (1), wherein the terminal is connected to a security module (2) having a microprocessor of its own, wherein
- by the terminal (1) a request is transmitted (S2, S9) to the security module (2), and
- the identity of the software is checked (S3, S10) by the security module;
- access rights corresponding to the software are determined (S4, S 11) by the security module (2) on the basis of data stored in the security module (2);
- a response is transmitted (S5, S12) by the security module (2) to the terminal (1); and
- the software is executed (S7, S 13) on the terminal;
**characterized in that**
by the access rights, the access to resources of the terminal (1) is regulated within the framework of the execution of the software;
the access rights are contained either in the request or in the response, wherein the security module (2) respectively either checks whether the access rights contained in the request match the determined access rights (S11), or transmits the determined access rights in the response to the terminal (1) (S5);
by the response of the security module (2) the execution of the software on the terminal (1) with the determined access rights is released by the security module (2); and
the determination of the access rights takes place by a selection of access rights allocated to a cryptographic key employed in the step of checking the identity of the software.

2. The method according to claim 1, **characterized in that** it is determined within the framework of the identity check of the software whether the software was changed in comparison to a predetermined version.

3. The method according to any of the preceding claims, **characterized in that** by the terminal (1) an identifier that is characteristic of the software is transmitted to the security module (2).

4. The method according to claim 3, **characterized in that** the identifier is checked by the security module (2).

5. The method according to any of the claims 3 to 4, **characterized in that** the check of the identifier takes place on the basis of a direct or indirect comparison with a cryptographically secured reference value for the identifier.

6. The method according to claim 5, **characterized in that** the reference value for the identifier is transmitted by the terminal (1) to the security module (2) before the check is carried out.

7. The method according to any of the claims 5 or 6, **characterized in that** the reference value for the identifier is subjected to a cryptographic transformation before the check is carried out.

8. The method according to claim 7, **characterized in that** the cryptographic transformation is carried out with the aid of a cryptographic key.

9. The method according to any of the preceding claims, **characterized in that** by the access rights access to interfaces of the terminal (1) and/or to data stored in the terminal (1) is regulated within the framework of the execution of the software.

10. A system comprising:
- a terminal (1) in which an executable software is implemented and which has resources whose utilization is tied to the proof of access rights and
- a security module (2) in which data for checking the identity of the software and data for determining the access rights are stored, which are available for executing the software, wherein the terminal and the security module are configured to carry out a method according to any of the claims 1 to 9.

11. A security module for a terminal (1), wherein in the security module (2) there are stored data for checking the identity of a software executable by the terminal (1) and data for determining or checking access rights which, upon the execution of the software, enable an access to resources of the terminal (1), wherein the security module is configured to
- receive from the terminal a request regarding the release of the execution of the software to the security module (2);
- check the identity of the software;
- determine (S4, S11) access rights corresponding to the software on the basis of the data stored for determining or checking access rights; and
- transmit (S5, S12) a response (2) to the terminal (1);
**characterized in that**
by the access rights the access to resources of the terminal (1) is regulated within the framework of the execution of the software;
the access rights are contained either in the request or in the response, wherein the security module (2) respectively either checks whether the access rights contained in the request match the determined access rights (S11), or transmits the determined access rights in the response to the terminal (1) (S5);
through the response of the security module (2) the execution of the software on the terminal (1) with the determined access rights is released by the security module (2); and the security module is configured to determine the access rights by selecting access rights allocated to a cryptographic key employed in the step of checking the identity of the software.

## Revendications

1. Procédé d'exécution d'un logiciel sur un terminal (1), le terminal étant relié à un module de sécurité (2) doté d'un propre microprocesseur,
- une demande étant transmise (S2,S9) par le terminal (1) au module de sécurité (2), et
- l'identité du logiciel étant vérifiée (S3,S10) par le module de sécurité;
- des droits d'accès correspondant au logiciel étant déterminés (S4,S11) par le module de sécurité (2) sur la base de données qui sont mémorisées dans le module de sécurité (2);
- une réponse étant transmise (S5,S12) du module de sécurité (2) au terminal (1); et
- le logiciel étant exécuté sur le terminal (S7,S13);
**caractérisé en ce que**
en vertu des droits d'accès, l'accès à des ressources du terminal (1) est réglé dans le cadre de l'exécution du logiciel;
les droits d'accès sont contenus soit dans la demande, soit dans la réponse, le module de sécurité (2) respectivement soit vérifiant si les droits d'accès contenus dans la demande concordent (S11) avec les droits d'accès déterminés, soit transmettant (S5) dans la réponse au terminal (1) les droits d'accès déterminés;
par la réponse du module de sécurité (2), l'exécution du logiciel sur le terminal (1) avec les droits d'accès déterminés est débloquée par le module de sécurité (2); et
la détermination des droits d'accès a lieu par une sélection de droits d'accès qui sont affectés à une clé cryptographique utilisée lors de l'étape de la vérification de l'identité du logiciel.

2. Procédé selon la revendication 1, **caractérisé en ce que**, dans le cadre de la vérification d'identité du logiciel, il est déterminé si le logiciel a été modifié par rapport à une version donnée.

3. Procédé selon une des revendications précédentes, **caractérisé en ce que**, par le terminal (1), un identificateur caractéristique du logiciel est transmis au module de sécurité (2).

4. Procédé selon la revendication 3, **caractérisé en ce que** l'identificateur est vérifié par le module de sécurité (2).

5. Procédé selon une des revendications de 3 à 4, **caractérisé en ce que** la vérification de l'identificateur a lieu sur la base d'une comparaison directe ou indirecte avec une valeur de référence cryptographiquement sécurisée pour l'identificateur.

6. Procédé selon la revendication 5, **caractérisé en ce que** la valeur de référence pour l'identificateur est transmise du terminal (1) au module de sécurité (2) avant la réalisation de la vérification.

7. Procédé selon une des revendications 5 ou 6, **caractérisé en ce que** la valeur de référence pour l'identificateur est soumise à une transformation cryptographique avant la réalisation de la vérification.

8. Procédé selon la revendication 7, **caractérisé en ce que** la transformation cryptographique est réalisée à l'aide de la clé cryptographique.

9. Procédé selon une des revendications précédentes, **caractérisé en ce que**, par les droits d'accès, l'accès à des interfaces du terminal (1) et/ou à des données qui sont mémorisées dans le terminal (1) est réglé dans le cadre de l'exécution du logiciel.

10. Système comprenant
- un terminal (1) dans lequel un logiciel exécutable est implémenté et qui présente des ressources dont l'exploitation est liée à la justification de droits d'accès et
- un module de sécurité (2) dans lequel des données destinées à la vérification de l'identité du logiciel et des données destinées à la détermination des droits d'accès sont mémorisées, lesquelles sont à disposition pour l'exécution du logiciel, le terminal et le module de sécurité étant configurés pour l'exécution d'un procédé selon une des revendications de 1 à 9.

11. Module de sécurité destiné à un terminal (1), dans lequel module de sécurité (2) des données destinées à la vérification de l'identité d'un logiciel exécutable par le terminal (1) et des données destinées à la détermination ou la vérification de droits d'accès sont mémorisées, lesquelles permettent lors de l'exécution du logiciel un accès à des ressources du terminal (1), le module de sécurité (2) étant configuré pour
- recevoir de la part du terminal une demande concernant le déblocage de l'exécution du logiciel au module de sécurité (2);
- vérifier l'identité du logiciel;
- déterminer (S4,S11) des droits d'accès correspondant au logiciel, sur la base des données mémorisées pour la détermination ou vérification de droits d'accès; et
- transmettre (SS,S12) une réponse (2) au terminal (1);
**caractérisé en ce que**
en vertu des droits d'accès, l'accès à des ressources du terminal (1) est réglé dans le cadre de l'exécution du logiciel;
les droits d'accès sont contenus soit dans la demande, soit dans la réponse, le module de sécurité (2) respectivement soit vérifiant si les droits d'accès contenus dans la demande concordent (S11) avec les droits d'accès déterminés, soit transmettant (S5) dans la réponse au terminal (1) les droits d'accès déterminés;
par la réponse du module de sécurité (2), l'exécution du logiciel sur le terminal (1) avec les droits d'accès déterminés est débloquée par le module de sécurité (2); et
le module de sécurité est configuré pour déterminer les droits d'accès par sélection de droits d'accès qui sont affectés à une clé cryptographique utilisée lors de l'étape de la vérification de l'identité du logiciel.
